# EUROPÄISCHE PATENTANMELDUNG

(11) **EP 0 899 990 A2**
(43) Veröffentlichungstag der Anmeldung: **03.03.1999**
(21) Anmeldenummer: 98115266.3
(22) Anmeldetag: 13.08.1998
(51) Int. Cl.: H05B 39/02

(54) **Leuchtmittelbeschaltung**

(30) Priorität: 29.08.1997 DE 29715545 U
(71) Anmelder: Huis, Wolfgang, 49811 Lingen (DE)
(72) Erfinder: Huis, Wolfgang, 49811 Lingen (DE)
(74) Vertreter: Morgan, James Garnet

(57) **Zusammenfassung**

Eine Leuchtmittelbeschaltung, insbesondere für wechselstrombetriebene Niedervolt-Leuchtmittel, zeichnet sich aus durch mindestens zwei zueinander antiparallel und zum Leuchtmittel in Reihe geschaltete Dioden, um die anliegende Spannung am Leuchtmittel um den Wert der Sperrspannung der Dioden beispielsweise um 0,7 V zu reduzieren, was eine Verlängerung der Lebensdauer des Leuchtmittels zur Folge hat. Bei einer Weiterbildung werden mehrere Diodenpaare, die jeweils aus zwei antiparallel geschalteten Dioden bestehen, über einen Wahlschalter miteinander kombiniert, um eine brummfreie Dimmerfunktion zu erreichen.

## Beschreibung

Die vorliegende Erfindung betrifft eine Leuchtmittelbeschaltung, die sich insbesondere für wechselstrombetriebene Niedervoltleuchtmittel eignet.

Solche Leuchtmittel sind heutzutage in Form von Niedervolthalogenlampen bei Niedervolthalogenleuchten sowohl in Privatwohnungen als auch in größerer Anzahl in Geschäften, Diskotheken und Firmengebäuden anzutreffen.

Es ist bekannt, daß sich die Lebensdauer solcher Niedervoltlampen erhöhen laßt, wenn diese mit einer Spannung betrieben werden, die unterhalb der vorgesehenen Nennspannung liegt. Wenn beispielsweise die am Leuchtmittel angelegte Spannung um 5 % niedriger liegt als vorgesehen, führt dies in etwa zu einer Verdoppelung der Lebensdauer. Bei einer Erhöhung der Spannung am Leuchtmittel über die Betriebsspannung hinaus um ca. 5 % verringert sich die Lebensdauer des Leuchtmittels entsprechend.

Gerade bei konventionellen Transformatoren, bestehend aus einem Eisenkern mit Kupferwicklung, ist es wichtig, daß diese mit ihrer Nennlast betrieben werden und zu 60 % ausgelastet sind. Wird ein konventioneller Transformator unterlastig betrieben, so steigt im ungünstigsten Fall die Sekundärspannung an und kann, je nach Bauart des Transformators, die Nennspannung der damit betriebenen Halogenlampen übersteigen. Dies verkürzt die Lebensdauer der angeschlossenen Leuchtmittel in erheblichem Maß.

Für den privaten Verbrauch spielt die Lebensdauer der Halogenlampen eine wesentliche Rolle, weil es einerseits lästig ist, wenn man immer wieder eine Lampe auswechseln muß, und zum anderen, weil gerade Halogenlampen und -birnen verhältnismäßig teuer sind.

Bei Diskotheken, Wirtschaften, Geschäftsräumen und Verkaufsräumen, wo solche Lampen in erheblichem Umfang eingesetzt werden, ist der frühzeitige Ausfall einer oder mehrerer Birnen ein großes Problem, weil dann die Beleuchtung nicht so ist wie vorgesehen und entweder sofort repariert werden muß oder für den Kunden das jeweilige Unternehmen nicht in einem guten Licht erscheinen läßt.

Viele Unternehmen sind daher zu einer Politik übergegangen, daß alle Lampen in einem bestimmten Zeitraum ausgewechselt werden, wobei dieser Zeitraum so bemessen wird, daß nur wenige Lampen in diesem Zeitraum kaputtgehen dürfen. Es werden daher viele noch brauchbare Lampen weggeworfen und auch bei Masseneinkauf stellen die Kosten für die "frühzeitige" Auswechslung vieler Lampen eine beträchtliche Kostenquelle dar.

Ein weiteres Problem bei Niedervoltlampen ist, daß Dimmer für solche Niedervoltlampen, die häufig erwünscht sind, verhältnismäßig teuer und kompliziert sind.

Die Aufgabe der vorliegenden Erfindung ist es, eine äußerst preisgünstige, technisch zuverlässige Leuchtmittelbeschaltung vorzusehen, mit der die Lebensdauer von Niedervoltlampen, insbesondere wechselstrombetriebene Niedervoltlampen, wesentlich verlängert werden kann, wobei das erfindungsgemäße Konzept vorzugsweise auch weiter entwickelt werden kann, um eine preisgünstige, brummfreie Dimmerfunktion zu erreichen.

Zur Lösung der erfindungsgemäßen Aufgabe wird eine Leuchtmittelbeschaltung der eingangs genannten Art vorgesehen, mit dem besonderen Kennzeichen, daß mindestens zwei zueinander antiparallel und zum Leuchtmittel in Reihe geschaltete Dioden vorgesehen sind, um die anliegende Spannung am Leuchtmittel um den Wert der Sperrspannung der Dioden beispielsweise um 0,7 V zu reduzieren, was eine Verlängerung der Lebensdauer des Leuchtmittels zur Folge hat.

Es wurde erfindungsgemäß erkannt, daß die Sperrspannung von üblichen Halbleiterdioden, die normalerweise um die 0,7 V beträgt, bei einer üblichen Betriebsspannung am Transformator von 12 V bei paarweiser antiparalleler Anwendung der Dioden eine Betriebsspannungreduzierung von 5,8 % entspricht und somit imstande ist, die angestrebte Verdoppelung der Lebensdauer einer Niedervolthalogenlampe sicherzustellen.

Dioden haben den Vorteil, daß diese bei kleinster Bauart für hohe Ströme ausgelegt sind. So können z.B. Dioden, die ohne weiteres imstande sind, Ströme von 6 A fließen zu lassen, für Leistungen von 0 bis 70 W eingesetzt werden und können somit die Spannung von drei Stück 20 W-Halogenlampen reduzieren.

Würde man für diesen Zweck einen Widerstand einsetzen wollen, so wären die Kosten für einen solchen Widerstand so hoch, daß er nicht mehr in Frage käme. Auch wäre sicherlich ein großes Problem, Platz zu schaffen und sicherzustellen, daß von den Widerständen keine Brandgefahr ausgeht. Halbleiterdioden sind aber in ihren erforderlichen Abmessungen preisgünstig verfügbar. Von Vorteil ist auch, daß eine Verpolung ausgeschlossen ist, da die Dioden jedes Diodenpaars zueinander antiparallel angeordnet sind und es daher keine Rolle spielt in welcher Richtung das Diodenpaar in die Schaltung integriert wird.

Zwar tritt mit der Herabsetzung der Betriebsspannung um etwa 5 % auch eine Herabsetzung der Helligkeit der Lampe ein. Diese Herabsetzung der Helligkeit ist aber kaum wahrnehmbar und könnte gegebenenfalls durch die Wahl einer Halogenlampe für eine etwas höhere Nennleistung ausgeglichen werden, wobei bei Betrieb dieser für eine etwas höhere Nennleistung ausgelegte Halogenlampe mit der erfindungsgemäßen Leuchtmittelbeschaltung ebenfalls die angestrebte Verlängerung der Lebensdauer eintreten würde.

Es soll auch im Auge behalten werden, daß die von den Versorgungsunternehmen zur Verfügung gestellte Netzspannung Schwankungen von ±5 % unterliegen dürfen. Da bei Anwendung eines Transformators eine 5 %ige Schwankung der Netzspannung sich ebenfalls als eine 5 %igen Änderung der Sekundärspannung äußert, ist die etwas kleinere Betriebsspannung, wie erfindungsgemäß zur Verfügung gestellt wird, letztendlich eine Herabsetzung der Betriebsspannung, die im Bereich der zulässigen Netzspannungsschwankung nach unten liegt.

Andererseits, wenn eine Netzspannungsschwankung nach oben stattfinden würde, würde dies die Lebensdauer der Niedervolthalogenlampen beeinträchtigen. Dieser Beeinträchtigung wird auch erfindungsgemäß entgegengewirkt. Mit anderen Worten, bei Erhöhung der Spannung vom Versorgungsunternehmen würde sich auch die Sekundärspannung erhöhen, was für die Leuchtmittel extrem nachteilig ist. Diese Erhöhung kann durch die Schutzbeschaltung der Erfindung aufgehoben werden.

Als kleiner Nachteil ist zu erwähnen, daß der Lichtstrom beim Betrieb mit Unterspannung ebenfalls abnimmt. Da jedoch gerade Niedervoltleuchtmittel (Sternenhimmel usw.) in größeren Mengen und vorwiegend als Effekt- und Objektbeleuchtung eingesetzt werden, ist es wesentlich wünschenswerter, eine längere Lebensdauer als einen hundertprozentigen Lichtstrom zu haben.

Für das menschliche Auge ist es in allgemeinen Anlagen mit mehreren Leuchtmitteln kaum zu erkennen, ob diese mit einem geringeren Lichtstrom betrieben werden.

Die Erfindung ist nicht beschränkt auf Niedervolthalogenlampen, sondern kann mit jeder Niedervoltbirne einen Vorteil verschaffen.

Wegen der extremen Empfindlichkeit von mit 12 V betriebenen Leuchtmitteln gegenüber einer Überspannung sind verschiedene Hersteller von Transformatoren zu einer Sekundärspannung von 11,8 V übergegangen.

Aber selbst bei mit 11,8 V Sekundärspannung betriebenen Anlagen ist die Schutzbeschaltung vorteilhaft, da sich die Nennspannung bei 12 V Leuchtmitteln um 7,5 % reduziert und sich somit eine bis zu 250 %ige Erhöhung der Lebensdauer einstellt. Gerade in unstabilen Netzen von Versorgungsunternehmen bietet die Schutzbeschaltung enorme Vorteile, da Überspannungen für Niedervoltleuchtmittel extrem nachteilig sind. Diese in unstabilen Netzen betriebenen Leuchtmittel fallen dann oft sehr unterschiedlich aus.

Eine noch höhere Lebensdauer läßt sich erreichen, wenn beispielsweise zwei Paar Diodenschaltungen, die in Reihe zum Leuchtmittel geschaltet sind und jeweils aus zwei antiparallel geschalteten Dioden bestehen, was eine Reduzierung der Spannung am Leuchtmittel um beispielsweise 1,4 V zur Folge hat, vorgesehen sind.

Besonders günstig ist es, wenn das antiparallel geschaltete Diodenpaar in einem Keramikadapter einer handelsüblichen Normfassung integriert ist.

Auf diese Weise kann über eine reine Steckfunktion das erfindungsgemäß antiparallel geschaltete Diodenpaar der Lampe direkt vorgeschaltet werden. Durch diese individuelle Einzelvorschaltung direkt am Leuchtmittel kann daher frei gewählt werden, ob man vorrangig die gewünschte Leuchtstärke erzielen möchte oder eine wesentlich höhere Lebensdauer.

Alternativ hierzu können die Diodenpaare entsprechend dem Kennzeichen von Anspruch 5 in einer Klemmbox integriert werden, die häufig als Verteiler zwischen Niedervoltlampen und einem Transformator eingesetzt wird.

Besonders günstig ist es, wenn eine Reihenschaltung von mehreren, antiparallel geschalteten Diodenpaaren vorgesehen ist sowie ein Wahlschalter, durch den die Anzahl der dem Leuchtmittel zugeschalteten Diodenpaaren auswählbar ist, um somit eine Dimmerfunktion mit echtem Spannungsabschnitt am Leuchtmittel zu erreichen.

Auf diese Weise wird eine einwandfreie Dimmerfunktion erreicht, ohne das lästige Brummen, das häufig bei Dimmern anzutreffen ist, in Kauf nehmen zu müssen. Weiterhin ermöglicht die Realisierung der Dimmerfunktion mit Paaren von antiparallel geschalteten Dioden eine beinahe unendliche Vielzahl von technischen Möglichkeiten bei der Gestaltung des Dimmers. Beispielsweise könnte eine Linearanordnung mit Schieber realisiert werden.

Die Erfindung wird nachfolgend näher erläutert anhand von Ausführungsbeispielen und unter Bezugnahme auf die Zeichnungen, die zeigen:
- Fig. 1: eine Grafik zur Darstellung der Lebensdauer einer mit Wechselstrom betriebenen Niedervoltlampe als Funktion der angelegten Spannung,
- Fig. 2: eine erste Ausführungsform der erfindungsgemäßen Leuchtmittelbeschaltung in Form eines antiparallel geschalteten Diodenpaares,
- Fig. 3: eine zweite erfindungsgemäße Ausführungsform einer Leuchtmittelbeschaltung mit zwei Paaren von jeweils zwei antiparallel geschalteten Dioden,
- Fig. 4: eine perspektivische Darstellung einer handelsüblichen Keramikfassung für Niedervoltleuchtmittel,
- Fig. 5: einen schematischen Querschnitt durch einen Keramikadapter, der zur Anwendung mit der Keramikfassung nach Fig. 4 geeignet ist und eine erfindungsgemäße Leuchtmittelbeschaltung enthält,
- Fig. 6: eine schematische Darstellung einer sog. Anschlußbox mit sechs Abgangsklemmen und einem erfindungsgemäß ausgebildeten, zentral vorgeschalteten Diodenpaar,
- Fig. 7: eine alternative Darstellung einer sog. Anschlußbox mit mehreren, erfindungsgemäß antiparallel geschalteten Diodenpaaren,
- Fig. 8: eine schematische Darstellung eines erfindungsgemäßen Dimmers und
- Fig. 9: eine schematische Darstellung einer möglichen, erfindungsgemäß ausgebildeten Ausführungsform eines Dimmers.

In der nachfolgenden Beschreibung werden gleiche Bezugszeichen für gleiche Teile verwendet, ggf. mit einem Zusatz in den Fällen, wo das entsprechende Teil mehrfach vorgesehen ist. Um die Beschreibung nicht unnötig zu verlängern, wird die Funktion von Teilen, die mit dem gleichen Bezugszeichen (ggf. mit einem Strich oder mehreren Strichen) gekennzeichnet, nicht bei jeder Ausführungsform vollständig wiederholt. Die Beschreibung soll so verstanden werden, daß die Beschreibung eines mit einem bestimmten Bezugszeichen gekennzeichneten Teils auch für die entsprechend numerierten Teile der weiteren Zeichnungen gilt.

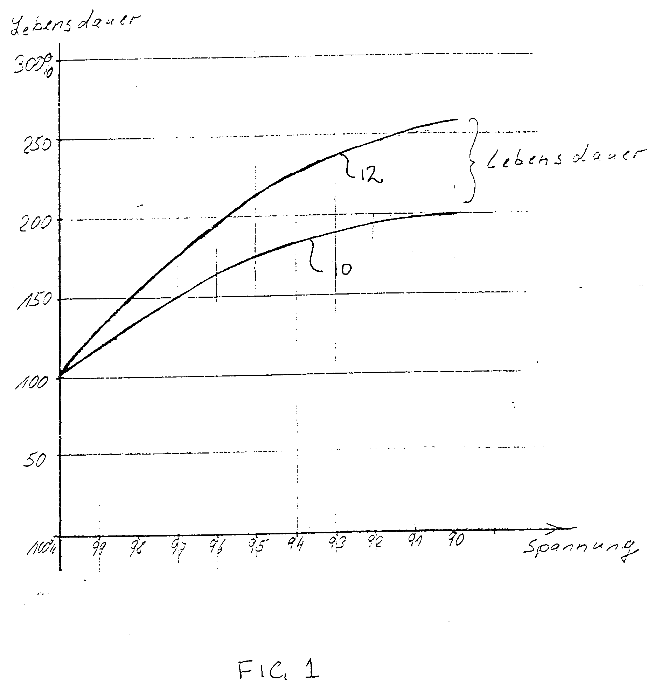

Die Grafik der Fig. 1 zeigt, wie die Lebensdauer einer herkömmlichen Niedervoltlampe, beispielsweise einer 12 V-Halogenlampe, sich mit der Höhe der angelegten Betriebsspannung ändert.

Es wird angenommen, daß die Lampe bei der vollen Betriebsspannung von 100 % (üblicherweise 12 V) eine Lebensdauer hat von 100 %.

Die zwei Kurven 10 und 12 zeigen dann die obere und untere Grenze der Lebensdauererhöhung bei einer angelegten Spannung, die kleiner ist als die vorgesehene Betriebsspannung. Hier sind die Spannungswerte im Prozentsatz der Betriebsspannung entlang der Abszisse gezeigt, und zwar von 100 % bis 90 %.

Man sieht, daß beispielsweise bei einer Betriebsspannung, die 95 % der vorgesehenen Betriebsspannung aufweist, die Lebensdauer sich in der Bandbreite zwischen 175 und 220 % der nominalen Lebensdauer liegt, d.h. im Schnitt etwa die zweifache normale Lebensdauer beträgt.

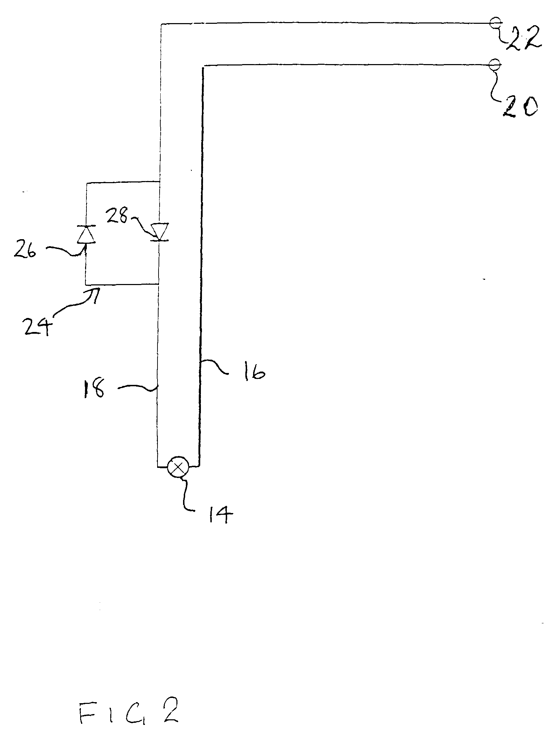

Fig. 2 zeigt nun eine 12 V-Niederspannungslampe 14, die über Zuleitungen 16 und 18 an zwei Ausgangsklemmen 20 und 22 einer die Niedervoltlampe 14 speisenden Wechselstrom-Spannungsquelle von, in diesem Beispiel, 12 V angeschlossen ist. Es kann sich bei dieser Spannungsquelle beispielsweise um einen üblichen Transformator handeln, der die angelegte Netzspannung von üblicherweise 220 V auf 12 V heruntertransformiert.

In der einen Zuleitung 18 befindet sich, in Reihe mit der Lampe 14 geschaltet, ein Diodenpaar 24, bestehend aus zwei antiparallel zueinander geschalteten Dioden 26 und 28.

Während der einen Halbwelle der angelegten Wechselspannung leitet die eine Diode 26, während die zweite Diode 28 nur während der anderen Halbwelle leitend ist. Beide Dioden erbringen in diesem Beispiel einen Spannungsabfall von 0,7 V, so daß die angelegte Spannung eine Niedervoltlampe 14 etwa 5,8 % unterhalb des vorgesehenen Wertes liegt. Hierdurch wird entsprechend der Fig. 1 die Lebensdauer der Lampe 14 um etwa das zweifache erhöht.

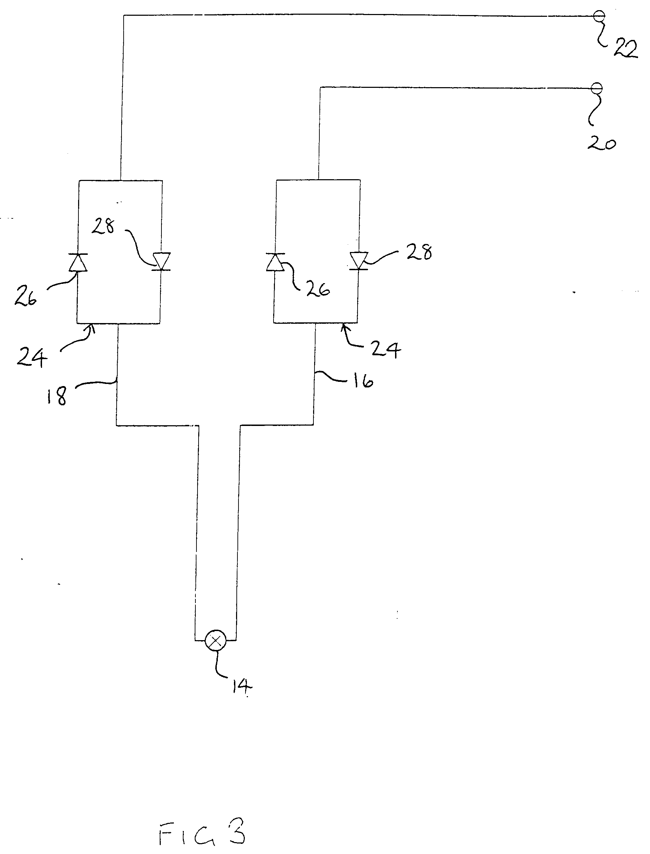

Fig. 3 zeigt eine weitergebildete Anordnung gemäß der Anordnung von Fig. 2 mit einem zweiten Diodenpaar 24, das diesmal in der Zuleitung 16 angeordnet ist und ebenfalls aus zwei antiparallel geschalteten Dioden 26 und 28 besteht. Das heißt, auch das zweite Diodenpaar 24 ist in Reihe mit der Niedervoltlampe 14 geschaltet. Auch hier leitet die eine Diode 26 während der einen Halbwelle und die antiparallel geschaltete Diode 28 während der anderen Halbwelle.

Es wäre durchaus möglich, das zweite Diodenpaar 24 ebenfalls in der Zuleitung 18 anzuordnen. Auch in diesem Fall wären die beiden Diodenpaare 24 in Reihe mit den Leuchtmitteln geschaltet. Es wäre auch denkbar, noch weitere, antiparallel geschaltete Diodenpaare vorzusehen und diese entweder in der Zuleitung 16 oder in der Zuleitung 18 anzuordnen.

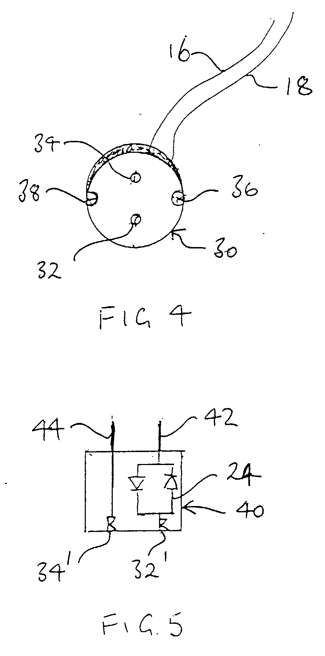

Eine konkrete Möglichkeit der Einführung eines erfindungsgemäßen Diodenpaares in der Zuleitung zu einer Niedervoltlampe wird in den Fig. 4 und 5 gezeigt.

Fig. 4 zeigt nämlich eine herkömmliche Keramikfassung 30 für Niedervoltleuchtmittel, die zwei flexible Anschlußleitungen 16 und 18 aufweist, die an jeweiligen Steckbuchsen 32 und 34 enden, die ausgelegt sind, um die Stiftsockel einer Niedervoltlampe aufzunehmen. Die Bezugszeichen 36 und 38 deuten auf Befestigungspunkte hin, beispielsweise Löcher, die es ermöglichen, die Keramikadapter 36 mit einer Lampe beispielsweise zu verschrauben oder zu vernieten. Der Körper der Keramikfassung besteht, wie der Name schon sagt, aus Keramik oder Porzellan und wird üblicherweise an einer oder an beiden Stirnflächen mit einer Schicht aus Glimmer versehen, die als Wärmeisolierung dient.

Zur Anwendung mit solchen Keramikfassungen wird nunmehr erfindungsgemäß ein Keramikadapter 40 vorgesehen, der in Fig. 5 in schematischem Querschnitt gezeigt ist. Dieser Keramikadapter 40 enthält in kompakter Bauweise das antiparallel geschaltete Diodenpaar 24 und weist in seinem unteren Bereich in Fig. 5 zwei Steckbuchsen 32' und 34' auf, die nunmehr zur Aufnahme des Stiftsockels der Niedervoltlampe gedacht sind. Der Keramikadapter 40 ist aber auch mit einem Stiftsockel versehen mit den Stiften 42 und 44, die die gleichen Abmessungen haben wie die Stifte des Stiftsockels der Niedervoltlampe, der üblicherweise in die Keramikfassung der Fig. 4 eingesteckt wird. Der eine Stift 42 paßt somit in die Steckbuchse 32 hinein, der elektrisch mit der Zuleitung 18 verbunden ist und wird innerhalb des Keramikadapters 40 an das Diodenpaar 24 angeschlossen. Die Steckbuchse 32' wird ebenfalls an das Diodenpaar 24 angeschlossen, so daß das Diodenpaar 24 in der Zuleitung 18 zwischen der hier nicht gezeigten Lampe und dem Transformator liegt.

Der Stift 44 des Keramikadapters 40 führt direkt zu der Steckbuchse 34' und wird beim Zusammenstecken des Keramikadapters 40 der Fig. 5 und der Keramikfassung 30 der Fig. 4 in die Steckbuchse 34 eingeführt, so daß eine elektrische Verbindung zwischen der Zuleitung 16 und der Steckbuchse 34' zustande kommt. Obwohl nicht in Fig. 5 gezeigt, wird der Keramikadapter 40 ebenfalls mit zwei Befestigungslöchern ausgebildet, die es ermöglichen, den Keramikadapter 40 mit der Keramikfassung 30 zu befestigen und auch die Befestigung an einer Lampenfassung ermöglichen. Für viele Anwendungen ist eine derartige Befestigung gar nicht notwendig, da die geltenden Vorschriften vorsehen, daß die Steckbuchsen 32, 34 und dementsprechend auch die Steckbuchsen 32', 34' eine gewisse Klemmkraft auf die Steckstifte (beispielsweise 42, 44) ausüben müssen, wobei diese Klemmkraft vollkommen ausreicht, um eine Niedervoltlampe zu halten.

Durch diese zusammensteckbare Ausführung gemäß Fig. 5 können ggf. mehrere Keramikadapter in Reihe hintereinander gesteckt werden. Es leuchtet ein, daß es günstig ist, wenn der Keramikadapter 40 der Fig. 5 zumindest den gleichen Durchmesser aufweist wie die Keramikfassung 30. Die Baulänge kann aber ggf. unterschiedlich gewählt werden. auch können, sofern erforderlich, Wärmeisolierungen am Keramikadapter 40 vorgesehen werden. Es besteht auch die Möglichkeit das Diodenpaar in die Normfassung der Fig. 4 zu integrieren. In diesem Fall wird die Normfassung entsprechend der Fig 5 ausgebildet nur mit dem Unterschied, daß die Zuleitungen 16 und 18 anstelle der Stifte 44 und 42 vorzusehen sind.

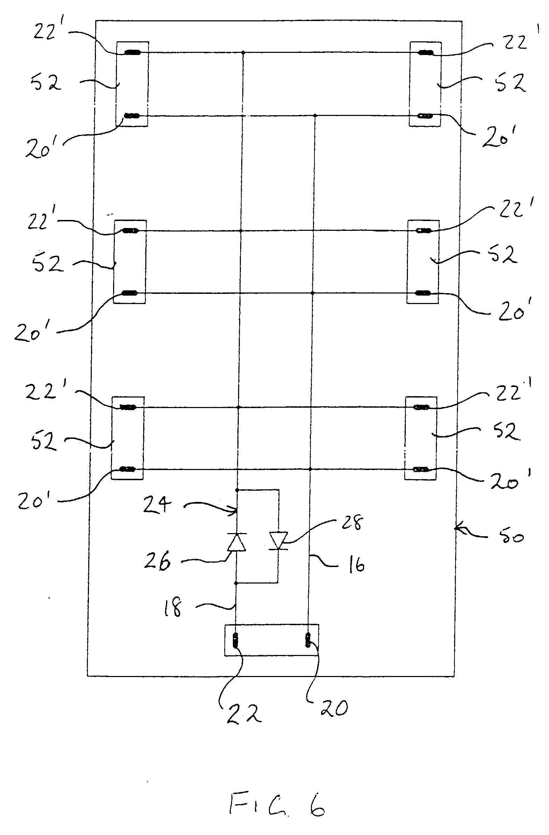

Eine andere Möglichkeit, ein erfindungsgemäßes Diodenpaar an einer Niedervoltlampe anzuschließen, ist Fig. 6 zu entnehmen. Fig. 6 zeigt nämlich eine sog. Anschlußbox oder Klemmbox 50 mit zwei Eingangsklemmen 20 und 22, die innerhalb der Klemmbox über entsprechende Leitungen 16 und 18 an in diesem Beispiel sechs Abgangsklemmeinrichtungen 52 angeschlossen sind. Jede Abgangsklemmeinrichtung 52 weist zwei Anschlußklemmen 20', 22' auf, die über weitere Zuleitungen (nicht gezeigt) an jeweilige Niedervoltlampen anschließbar sind. Mit anderen Worten wirkt die Klemmbox oder Anschlußbox 50 der Fig. 6 wie ein Verteiler zu mehreren, parallel zueinander geschalteten Niedervoltlampen, die jeweils an einer der Klemmeinrichtungen 52 angeschlossen werden.

Anstatt für jede Niedervoltlampe ein eigenes Diodenpaar vorzusehen, wird in diesem Beispiel innerhalb der Klemmbox ein einziges Diodenpaar 24 vorgesehen, die wie bisher aus zwei antiparallel zueinander geschalteten Dioden 26 und 28 besteht, die während jeweiliger Halbwellen der an den Klemmen 20, 22 angelegten Wechselspannung von beispielsweise 12 V leiten. Dies bedeutet, daß das Diodenpaar 24 auch hier einen Spannungsabfall von üblicherweise 0,7V verursacht, so daß die an den Klemmeinrichtungen 52 anliegende Spannung um 0,7 V niedriger liegt als die Eingangsspannung an den Klemmen 20, 22.

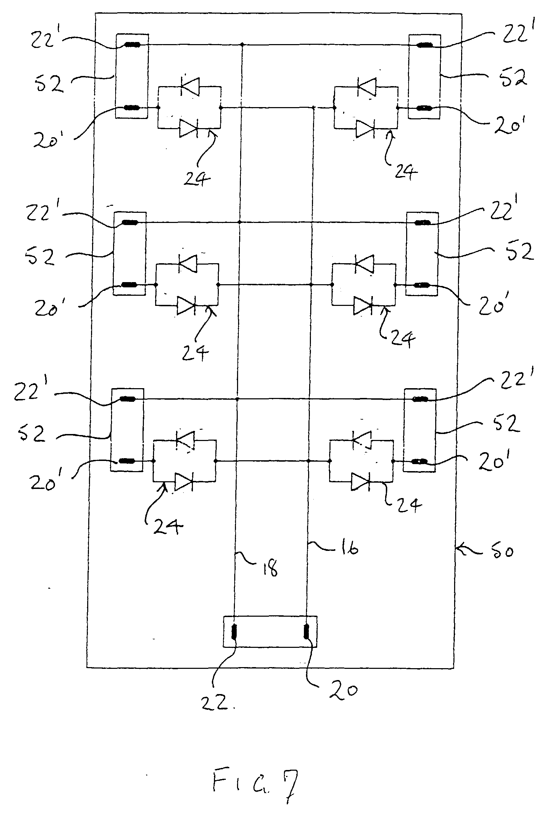

Fig. 7 zeigt ebenfalls eine Klemmbox 50 mit der gleichen Grundauslegung wie die Klemmbox der Fig. 6, nur wird hier in einer Zuleitung zu jeder Klemmeinrichtung 52 ein jeweiliges Diodenpaar 24 vorgesehen. Auch wenn Fig. 7 ein jeweiliges Diodenpaar bei jeder Klemmeinrichtung 52 zeigt, ist es durchaus möglich, solche Diodenpaare nur bei einigen ausgewählten Klemmeinrichtungen vorzusehen. So könnten beispielsweise Diodenpaare bei Klemmeinreichtungen vorgesehen werden, die zur allgemeinen Beleuchtung gehören, jedoch gerade keine zu einer wichtigen Lampe, die beispielsweise eine Vitrine voll ausleuchten soll.

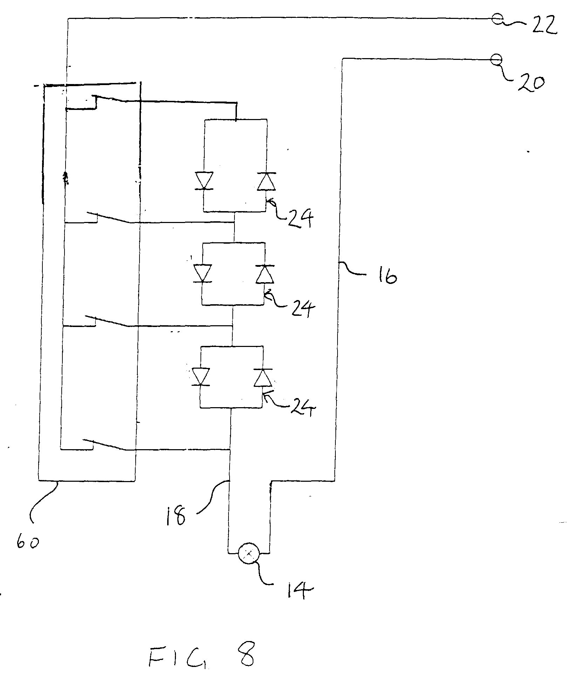

Fig. 8 zeigt nunmehr die Möglichkeit, mehrere Diodenpaare 24 so zu beschalten, daß eine Dimmerfunktion für die Niedervoltlampe 14 erzielt wird. Zwar wird hier nur eine einzige Niedervoltlampe 14 gezeigt. Die gleiche Beschaltung könnte aber zum gleichzeitigen Dimmen von mehreren, parallel zueinander geschalteten Lampen verwendet werden.

Wie ersichtlich, werden in dieser Ausführungsform drei Diodenpaare 24 in Reihe geschaltet. Hier ist zu beachten, daß auch mehrere Diodenpaare vorgesehen werden können. Es werden hier lediglich drei gezeigt, um die Funktion zu beschreiben.

Über einen Wahlschalter 60, der beispielsweise als Drehschalter ausgebildet werden kann, besteht die Möglichkeit, auszuwählen, ob die Spannung an der Klemme 22 direkt zu der Lampe 14 zugeführt wird oder über ein Diodenpaar oder zwei oder drei Diodenpaare. Wenn, wie üblicherweise vorgesehen, jedes Diodenpaar einen Spannungsabfall von 0,7 V verursacht, so läßt sich auf diese Weise die Betriebsspannung um maximal drei mal 0,7 V herabsetzen. Bei mehreren Diodenpaaren kann der erreichbare Spannungsabfall zur Sicherstellung der Dimmerfunktion erhöht werden.

der Wahlschalter 60 ist intern so geschaltet, daß diese Auswahl der Anzahl der in Reihe mit der Lampe 14 geschalteten Diodenpaare erfolgen kann.

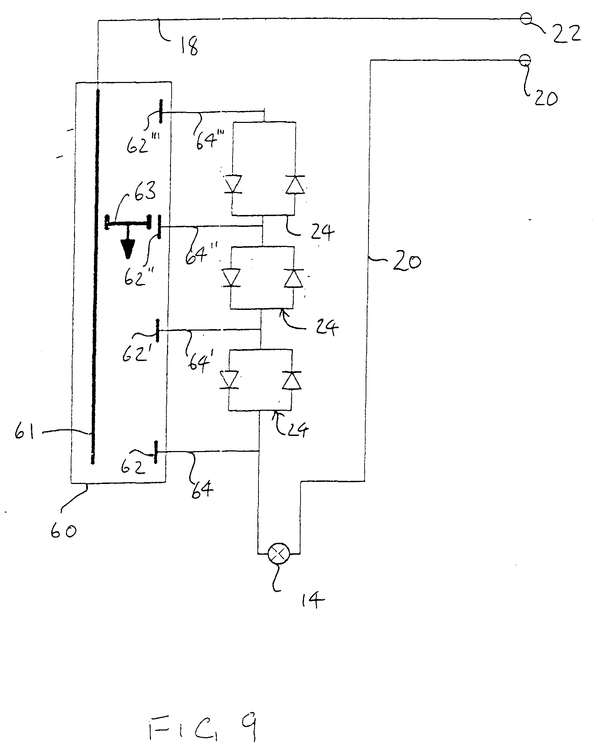

Fig. 9 zeigt eine Darstellung, die der der Fig. 8 sehr ähnlich ist. Hier wird jedoch der Wahlschalter 60 als Schiebeschalter realisiert. Durch Verschiebung des verschiebbaren Schalters wird je nach Position des Schaltgliedes die Anzahl der in Reihe mit der Niedervoltlampe geschalteten Diodenpaare geändert. Das verschiebbare Schaltglied ist auf der einen Seite in Kontakt mit einer Schiene, die zur Klemme 22 führt, auf der anderen Seite kommt sie in Berührung mit Schaltklemmen 62, 62', 62'' und 62''', die über jeweilige Stichleitungen 64, 64', 64'' und 64''' zu den Diodenpaaren führen.

Obwohl in allen vorhergehenden Ausführungsformen davon ausgegangen wird, daß die Sperrspannung der verwendeten Dioden 0,7 V beträgt, wird der Vollständigkeit halber darauf hingewiesen, daß diese Sperrspannung eine Funktion der Konstruktion der Halbleiterdioden ist und durch die Wahl von unterschiedlichen Materialien für die Halbleiterdioden auch anders gewählt werden könnte. Nur sind herkömmliche Dioden mit einer Sperrspannung von 0,7 V in großer Anzahl und preisgünstig erhältlich.

Es soll darauf hingewiesen werden, daß die zwei zueinander antiparallel geschalteten Dioden durch einen sogenannten Diac realisiert werden können. Als weitere Realisierung der zwei antiparallel geschalteten Dioden käme ein Triac in Frage, der in seiner Bauweise zwei antiparallelen Einzeldioden mit Zündanschluß gleicht und die Spannung entsprechend reduziert.

## Patentansprüche

1. Leuchtmittelbeschaltung, insbesondere für wechselstrombetriebene Niedervolt-Leuchtmittel (14), gekennzeichnet durch mindestens zwei zueinander antiparallel und zum Leuchtmittel in Reihe geschaltete Dioden (26,28), um die anliegende Spannung am Leuchtmittel um den Wert der Sperrspannung der Dioden beispielsweise um 0,7 V zu reduzieren, was eine Verlängerung der Lebensdauer des Leuchtmittels zur Folge hat.

2. Leuchtmittelbeschaltung nach Anspruch 1 mit zwei Paar Diodenschaltungen (24), die in Reihe zum Leuchtmittel geschaltet sind und jeweils aus zwei antiparallel geschalteten Dioden (26,28) bestehen, was eine Reduzierung der Spannung am Leuchtmittel um beispielsweise 1,4 V zur Folge hat.

3. Leuchtmittelbeschaltung nach Anspruch 1, dadurch gekennzeichnet, daß das antiparallel geschaltete Diodenpaar (24) in einem Keramikadapter (40) für eine handelsübliche Normfassung integriert ist.

4. Leuchtmittelbeschaltung nach Anspruch 1, dadurch gekennzeichnet, daß das antiparallel geschaltete Diodenpaar (24) in einer Fassung (30) eines Niedervoltleuchtmittels (14), insbesondere in einer handelsüblichen Fassung integriert ist.

5. Leuchtmittelbeschaltung nach einem der Ansprüche 1 bis 3, dadurch gekennzeichnet, daß das antiparallel geschaltete Diodenpaar (24) oder mehrere solcher antiparallel geschalteten Diodenpaare in einer Klemmbox (50) integriert sind, die als Verteiler für den Betrieb von mehreren Niedervoltlampen (14) von einer Spannungsquelle dient.

6. Leuchtmittelbeschaltung nach einem der vorhergehenden Ansprüche, dadurch gekennzeichnet, daß ein oder mehrere antiparallel geschaltetes / geschaltete Diodenpaar / Diodenpaare einem handelsüblichen Transformator für Niedervoltleuchtmittel direkt nachgeschaltet werden und an die vorgesehene Leistung des Transformators angepaßt sind.

7. Leuchtmittelbeschaltung nach Anspruch 1 mit einer Reihenschaltung von mehreren, antiparallel geschalteten Diodenpaaren (24) und einem Wahlschalter (60), durch den die Anzahl der dem Leuchtmittel zugeschalteten Diodenpaaren (24) auswählbar ist, insbesondere um somit eine Dimmerfunktion mit echtem Spannungsabschnitt am Leuchtmittel zu erreichen.

8. Leuchtmittelbeschaltung nach Anspruch 7,dadurch gekennzeichnet, daß der Wahlschalter (60) ein Drehschalter ist.

9. Leuchtmittelbeschaltung nach Anspruch 7,dadurch gekennzeichnet, daß der Wahlschalter (60) ein linear verschiebbarer Schalter ist.

10. Leuchtmittelbeschaltung nach einem der vorhergehenden Ansprüche, dadurch gekennzeichnet, daß sie bei einem Caravan, Bus, LKW, PKW, Boot oder beim Camping einsetzbar ist.
